# EUROPÄISCHE PATENTSCHRIFT

(11) **EP 2 743 138 B1**
(45) Veröffentlichungstag und Bekanntmachung des Hinweises auf die Patenterteilung: **16.03.2016**
(21) Anmeldenummer: 13466037.2
(22) Anmeldetag: 16.12.2013
(51) Int. Cl.: B60R 13/04

(54) **Türkantenschutzeinrichtung**
Door edge protection device
Dispositif de protection de bordure de portière

(30) Priorität: 17.12.2012 CZ 20120901
(43) Veröffentlichungstag der Anmeldung: 18.06.2014
(73) Patentinhaber: Skoda Auto A.S., 293 60 Mladá Boleslav (CZ)
(72) Erfinder: Demel, Jan, CZ-294 04 Dolní Bousov (CZ)

(56) Entgegenhaltungen:
- DE-U1-202008 005 885
- US-A- 2 678 232
- US-A1- 2005 023 855

## Beschreibung

### Technisches Gebiet

Die Erfindung betrifft eine Schutzeinrichtung für den Schutz der Fahrzeugtürkanten vor einer Beschädigung beim Öffnen der Fahrzeugtür.

### Bisheriger Stand der Technik

Beim Parken insbesondere an engen Parkplätzen, z.B. in Kaufzentren, kommt es beim Öffnen der Tür oft zum Kontakt mit dem benachbarten Fahrzeug oder anderem Hindernis. Deshalb werden derzeit verschiedene Schutzeinrichtungen für den Schutz der Fahrzeugtürkante vor Stößen gegen benachbarte Fahrzeuge, Bäume, Mauern usw. und vor einer Beschädigung eingesetzt.

Im Dokument DE102007057936B4 ist eine Schutzeinrichtung der Fahrzeugtürkante offenbart, die ein Türkantenschutzprofil umfasst. Das Kantenschutzprofil wird beweglich an den zwei in Längsrichtung der Tür hintereinanderliegenden Stellen geführt. An einer der Stellen wird das Türkantenschutzprofil mittels eines drehbar gelagerten Exzenterhebels geführt. Die Darstellung dieser Lösung liegt darin, dass mittels des Exzenterhebels das Schutzprofil angetrieben wird, wobei die Drehbewegung des Exzenterhebels eine Vor- und Rückwärtsbewegung des Schutzprofils bewirkt.

Die Fig. 5a bis 5d im Dokument DE102007057936B4 stellen beispielhaft die Ausführung dar, wo die vordere Lagerung, bzw. vordere Führung als Kulissenführung und hintere als Gleitführung ausgeführt sind. In der Kulisse wird die Stange mit dem Schutzprofil mittels eines Bolzens und in der Gleitführung das Schutzprofil mittels einer Stange, die als Gleitstange ausgeführt ist, geführt. Der Antrieb erfolgt über den auf der Exzenterachse gelagerten Exzenterhebel. Der mit der Stange verbundene Exzenterbolzen ist in einem radialen Schlitz im Exzenterhebel gelagert. Der Bolzen wird also in einer Kulisse sowie in dem radialen Schlitz im Exzenterhebel geführt. Aus oben genannten geht hervor, dass bei einer Ausführung, in der für die direkte Betätigung der Gleitstange mit dem Schutzprofil z.B. ein Bowdenzug eingesetzt wird, würde der mit der Stange verbundene und in einer Kulisse gelagerte Bolzen gleiche Bewegung in der Kulisse ausführen, ohne dass er auch in dem radialen Schlitz im Exzenterhebel um den feststehenden Drehpunkt geführt werden müsste.

Im Dokument US2678232A stellen eine Türkantenschutzeinrichtung dar, die in der Fahrzeugtür angeordnet ist und bestehend aus einem Betätigungselement, einer Zugstange und einer Lagerung.

Die Fig. 12 und 15 im Dokument US20050023855A1 stellen die Ausführung dar, wo die Heckklappe Vorrichtung umfasst eine geradlinige Stange die drehbar an der Zahnstange über diese Verbindungswelle verbunden ist. Eine geradlinige Stange umfasst ein Schieber mit einen Stützwelle und weitere Verbindungswelle 155, die mit dem gekrümmten Arm verbunden ist. Die Heckklappe Vorrichtung umfasst auch eine Führung. Ein Schieber ist über eine Stützwelle an einer anderen Position auf der geradlinigen Stange von der Verbindungswelle vorgesehen ist, um so um die Stützwelle frei drehbar ist. Das Gleitstück ist so gelagert, dass eine Bewegung desselben wird durch eine Führung. Als Ergebnis kann durch Führen des Schiebers wird die Führung bewegt die Verbindungswelle 153 von der Stange 152 nach vorne und hinten entlang einer vorbestimmten Bewegungsbahn.
DE 202008005885 U1 beschreibt eine Türkantenschutzeinrichtung gemäß den Oberbegriff des Anspruchs 1.

### Darstellung der Erfindung

Die Aufgabe wird durch die erfindungsgemäße Schutzeinrichtung gelöst, welche die Fahrzeugtürkanten vor einer Beschädigung beim Öffnen der Fahrzeugtür schützen soll.

Die Schutzeinrichtung der Fahrzeugtürkanten ist in der Fahrzeugtür angeordnet und besteht aus einer Lagerung, einer Zugstange und einem Betätigungselement. Die Lagerung umfasst eine bogenförmige Kulisse mit geeigneter notwendiger Kulissenkrümmung. Das Betätigungselement ist mit einem Betätigungsbauteil wie z.B. einem Bowdenzug, einer Feder usw. verbunden.

Die Darstellung der Erfindung liegt darin, dass die Schutzeinrichtung einen Schenkel aufweist, der das Betätigungselement mit der Zugstange verbindet, wobei die Bewegung des Schenkels durch die Führungskulisse bestimmt wird. Der Schenkel umfasst einen hinteren, mittleren und vorderen Bolzen. Der mittlere Bolzen ist beweglich in der Kulisse gelagert. Die Bewegungsbahn des mittleren Bolzens in der Kulisse weist eine gebogene Form ohne einen feststehenden Drehpunkt auf. Der Schenkel ist mittels des hinteren Bolzens mit dem Betätigungselement und mittels des vorderen Bolzens mit der Zugstange schwenkbar verbunden. Die Zugstange umfasst an ihrem anderen, freien Ende eine Schutzleiste.

Die Lagerung umfasst auch einen Führungsbolzen und in der Zugstange ist eine Führungskulisse ausgebildet, in der der Führungsbolzen angeordnet ist und eine geführte Bewegung ausführt.

Die notwendige Bewegung der Schutzleiste ergibt sich aus der Bewegung des mittleren Bolzens des Schenkels in der Führungskulisse und zugleich aus der gelenkten Bewegung der Zugstange mittels des Führungsbolzens, der in der Führungskulisse der Zugstange angeordnet ist und um den die Führungskulisse verschiebbar ist.

### Übersicht der Figuren der Zeichnungen

Die Fig. 1 zeigt in einer schematischen Darstellung die Schutzeinrichtung der Fahrzeugtürkanten in der eingefahrenen Parkposition bei geschlossenen Fahrzeugtüren, die Fig. 2 zeigt in einer schematischen Darstellung die Schutzeinrichtung in einer Zwischenposition und die Fig. 3 zeigt in einer schematischen Darstellung die Schutzeinrichtung in der ausgefahrenen Arbeitsstellung, in der die Türkante bei geöffneter Fahrzeugtür geschützt wird.

### Ausführungisbeispiel der Erfindung

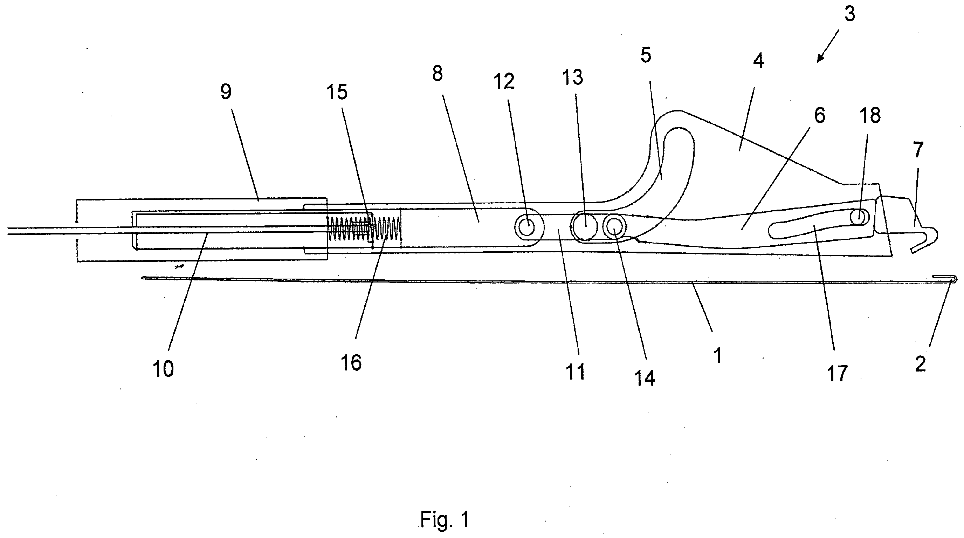

Die Fig. 1 bis 3 stellen die erfindungsgemäße Schutzeinrichtung 3 der Kante 2 der Fahrzeugtür 1 dar. Die Schutzeinrichtung 3 ist länglich in der Fahrzeugtür1 angeordnet. Die Türkantenschutzeinrichtung 3 umfasst eine Lagerung 4, in der eine bogenförmige Kulisse 5 ausgebildet ist. Die Schutzeinrichtung 3 besteht weiter aus einer Zugstange 6, an deren freiem Ende im Bereich der Kante 2 der Tür 1 eine Schutzleiste 7 befestigt ist. Die Türkantenschutzeinrichtung 3 umfasst weiter ein Betätigungselement 8, das in einem Gehäuse 9 angeordnet und zugleich in einer Lagerung 4 gelagert und mit dem Bowdenzug 10 und der Feder 16 verbunden ist. Die Schutzeinrichtung 8 ist mittels des Schenkels 11 mit der Zugstange 6 verbunden und zwar so, dass der Schenkel 11 an einem Ende den hinteren Bolzen 12 umfasst, mittels dem der Schenkel 11 schwenkbar mit dem Betätigungselement 8 verbunden ist, und zugleich umfasst der Schenkel 11 an dem anderen Ende den vorderen Bolzen 14, mittels dem der Schenkel 11 schwenkbar mit der Zugstange 6 verbunden ist. Die Zugstange 6 ist dann an einem Ende mit dem Schenkel 11 verbunden und weist an anderem Ende die befestigte Schutzleiste 7 auf. Der Schenkel 11 umfasst einen mittleren Bolzen 13, der zwischen dem hinteren Bolzen 12 und dem vorderen Bolzen 14 angeordnet ist. Der mittlere Bolzen 13 ist beweglich in der bogenförmigen Kulisse 5 befestigt. Der in der Kulisse 5 gelagerte mittlere Bolzen 13 hat so die notwendige, durch die Kulisse 5 genau vorgegebene, bogenförmige Bewegungsbahn ohne einen feststehenden Drehpunkt.

Die Lagerung 4 der Schutzeinrichtung 3 umfasst auch einen Führungsbolzen 18. Die Zugstange 6 der Schutzeinrichtung 3 umfasst eine Führungskulisse 17, in der der Führungsbolzen 18 befestigt ist und eine geführte Bewegung ausführt.

Die notwendige Bewegung der Schutzleiste 7 ergibt sich aus der Bewegung des mittleren Bolzens 13 des Schenkels 11 in der Kulisse 5 der Lagerung 4 und zugleich aus der gelenkten Bewegung der Zugstange 6 mittels des Führungsbolzens 18, der in der Führungskulisse 17 der Zugstange 6 angeordnet ist und um den die Führungskulisse 17 verschiebbar ist.

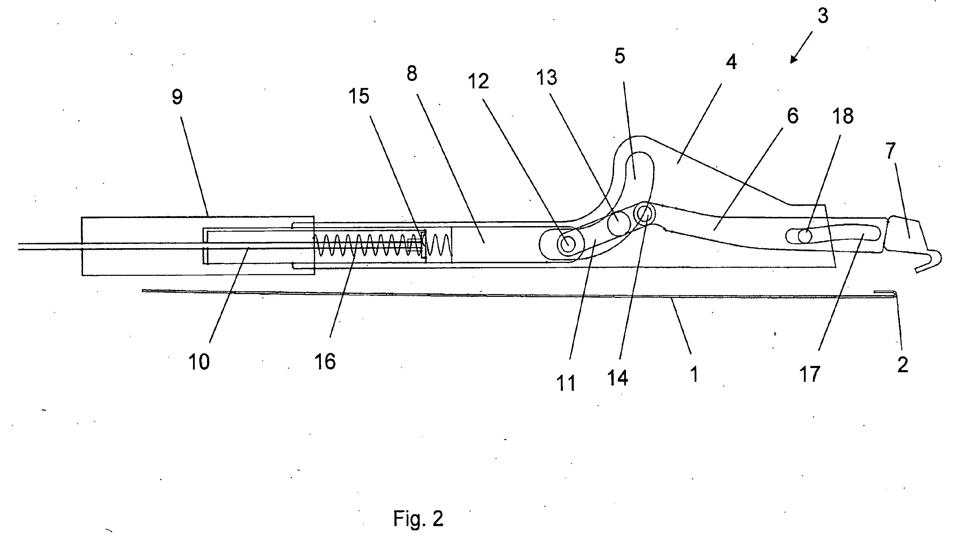

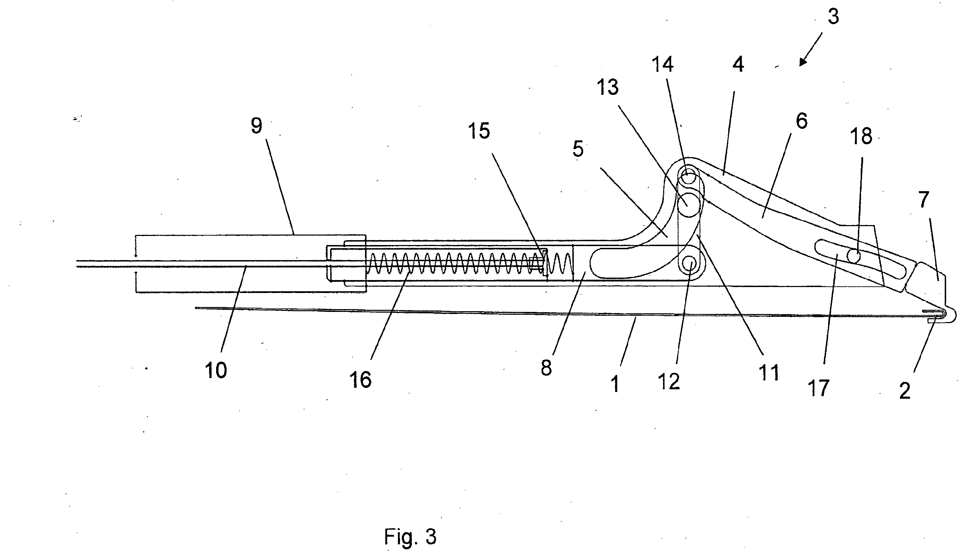

Die eigentliche Betätigung erfolgt mittels des Bowdenzugs 10 und der Feder 16, welche auf das Betätigungselement 8 einwirken. Beim Öffnen der Tür 1 wird die Schutzeinrichtung 3 in die Arbeitsstellung verstellt und zwar so, dass der Auslöser (nicht dargestellt) über den Bowdenzug 10 die gedrückte Feder 16 entlastet, welche das Betätigungselement 8 in Richtung zur Außenkante 2 der Tür 1 verschiebt. Durch diese Bewegung wird der mittlere Bolzen 13 des Schenkels 11 in der Kulisse 5 der Lagerung 4 verschoben und zugleich die Führungskulisse 17 der Zugstange 6 um den Führungsbolzen 18 der Lagerung 4 bewegt. Gleichzeitig wird die Schutzleiste 7 über die Kante 2 der Tür 1 (Fig. 2) hinausgeschoben. Nachfolgend wird die Leiste auf die Kante 2 der Tür 1 (Fig. 3) aufgesetzt. Die Schutzleiste 7 umschließt in der Arbeitsstellung bei geöffneter Tür 1 die Kante 2 der Fahrzeugtür 1 (Fig. 3).

Beim nachfolgenden Schließen der Fahrzeugtür 1, d.h. beim Verstellen der Schutzeinrichtung 3 in die Parkposition, erfolgt der Vorgang analog in umgekehrter Reihenfolge. Der Auslöser (nicht dargestellt) führt den rückwärtigen Einzug des Bowdenzugs 10 durch, der die Kraft der Feder 16 überwindet und das Betätigungselement 8 ins Gehäuse 9 einzieht. Gleichzeitig wird der mittlere Bolzen 13 des Schenkels 11 in der Kulisse 5 der Lagerung 4 rückwärtig verschoben und zugleich die Führungskulisse 17 der Zugstange 6 um den Führungsbolzen 18 bewegt. Die Schutzleiste 7 wird aus der Kante 2 der Tür 1 herausgeschoben und zurück in die Tür 1 länglich eingeschoben.

Vorausgesetzt, dass eine geeignete Bewegungsbahn der Schutzleiste 7 beibehalten wird, kann auch eine andere Form der Kulisse 5 sowie andere Form des Schenkels, 11 einschließlich der Anordnung der Bolzen 12, 13, 14 auf dem Schenkel 11, verwendet werden. Für die Kulisse 5 kann eine geradlinige Form oder eine anders gekrümmte Form der Kulisse 5 angewendet werden. Analog kann neben der im Ausführungsbeispiel genannten geradlinigen Form der Kulisse 5 auch die Form des Schenkels 11 nach Bedarf verschieden gekrümmt werden.

### Gewerbliche Anwendbarkeit

Die erfindungsgemäße Türkantenschutzeinrichtung kann in allen Fahrzeugen eingesetzt werden, bei denen die Fahrzeugtürkanten vor einer Beschädigung beim Öffnen der Fahrzeugtüren geschützt werden sollen, und kann vorteilhaft an allen Fahrzeugtüren angeordnet werden.

### Verwendete Bezeichnungen

- 1: Fahrzeugtür
- 2: Türkante
- 3: Türkantenschutzeinrichtung
- 4: Lagerung
- 5: Führungskulisse
- 6: Zugstange
- 7: Schutzleiste
- 8: Betätigungselement
- 9: Gehäuse
- 10: Bowdenzug
- 11: Schenkel
- 12: hinterer Bolzen des Schenkels
- 13: mittlerer Bolzen des Schenkels
- 14: vorderer Bolzen des Schenkels
- 15: Endstück des Bowdenzugs
- 16: Feder des selbsttätigen Öffnens
- 17: Führungskulisse der Zugstange
- 18: Führungsbolzen der Lagerung

## Patentansprüche

1. Die Türkantenschutzeinrichtung (3) der Fahrzeugtür (1), die in der Fahrzeugtür (1) angeordnet ist, bestehend aus:
einem Betätigungselement (8),
einer Zugstange (6) und
einer Lagerung (4), die eine Kulisse (5) umfasst,
wobei die Zugstange (6) an ihrem Ende im Bereich der Kante (2) der Tür (1) eine Schutzleiste (7) aufweist,
und wobei die Türkantenschutzeinrichtung (3) einen Schenkel (11) aufweist, der einen:
hinteren Bolzen (12), mittels dem der Schenkel (11) schwenkbar mit dem Betätigungselement (8) verbunden ist,
einen mittleren Bolzen (13), der beweglich in der Kulisse (5) gelagert ist, umfasst **gekennzeichnet, durch** einen vorderen Bolzen (14), mittels dem der Schenkel (11) schwenkbar mit der Zugstange (6) verbunden ist,
und wobei die Lagerung (4) einen Führungsbolzen (18) und die Zugstange (6) eine Führungskulisse (17) aufweisen, wobei die Zugstange (6) um den Führungsbolzen (18) verschiebbar ist, der in der Führungskulisse (17) der Zugstange (6) angeordnet ist.

## Claims

1. Door edge protection device (3) for a vehicle door (1), which is arranged in the vehicle door (1), comprising:
an actuating element (8),
a draw bar (6) and
a bearing part (4) which comprises a guide slot (5),
wherein the draw bar (6) has a protective strip (7) at its end in the region of the edge (2) of the door (1) and wherein the door edge protection device (3) has a leg (11) which comprises:
a rear pin (12) by means of which the leg (11) is pivotably connected to the actuating element (8),
a centre pin (13) which is movably mounted in the guide slot (5),
**characterized by** a front pin (14) by means of which the leg (11) is pivotably connected to the draw bar (6),
and wherein the bearing part (4) has a guide pin (18) and the draw bar (6) has a slotted guideway (17),
wherein the draw bar (6) is displaceable around the guide pin (18) which is arranged in the slotted guideway (17) of the draw bar (6).

## Revendications

1. Dispositif de protection de bordure de portière (3) pour la portière d'un véhicule (1), qui est disposé dans la portière de véhicule (1), constitué :
d'un élément d'actionnement (8),
d'une tige de traction (6) et
d'un support (4) qui comprend une coulisse (5),
la tige de traction (6) présentant à l'une de ses extrémités dans la région de la bordure (2) de la porte (1) une baguette de protection (7),
et le dispositif de protection de bordure de portière (3) présentant une branche (11) qui comprend :
un boulon arrière (12) au moyen duquel la branche (11) est connectée de manière pivotante à l'élément d'actionnement (8),
un boulon central (13) qui est supporté de manière déplaçable dans la coulisse (5), **caractérisé par** un boulon avant (14) au moyen duquel la branche (11) est connectée de manière pivotante à la tige de traction (6), et le support (4) présentant un boulon de guidage (18) et la tige de traction (6) présentant une coulisse de guidage (17), la tige de traction (6) pouvant être déplacée autour du boulon de guidage (18) qui est disposé dans la coulisse de guidage (17) de la tige de traction (6).
